# EUROPÄISCHE PATENTSCHRIFT

(11) **EP 0 821 494 B1**
(45) Veröffentlichungstag und Bekanntmachung des Hinweises auf die Patenterteilung: **24.11.2004**
(21) Anmeldenummer: 97112877.2
(22) Anmeldetag: 25.07.1997
(51) Int. Cl.: H04B 1/08, G10K 15/02

(54) **Audiosignalprozessor**
Audio signal processor
Processeur de signal audio

(30) Priorität: 26.07.1996 DE 19630330
(43) Veröffentlichungstag der Anmeldung: 28.01.1998
(73) Patentinhaber: SGS-THOMSON MICROELECTRONICS GMBH, 85630 Grasbrunn (DE)
(72) Erfinder: Kirchlechner, Peter, 83104 Hohenthann (DE); Schambacher, Jörg, 81667 München (DE); Lübbe Jürgen, 83553 Jacobneuharting (DE)
(74) Vertreter: Hirsch, Peter, Dipl.-Ing.

(56) Entgegenhaltungen:
- EP-A- 0 482 315
- US-A- 4 947 454
- US-A- 5 086 475
- ETSI: "Universal Personal Telecommunication (UPT);Access devices Dual Tone Multi Frequency (DTMF) sender for acoustical coupling to the microphone of a handset telephone" I-ETS 300 380, XX, XX, März 1995 (1995-03), Seiten 1-13, XP002216742

## Beschreibung

Die Erfindung betrifft einen Audiosignalprozessor, wie er insbesondere in bestimmten Geräten der Unterhaltungselektronik Verwendung findet. Der Audiosignalprozessor ist besonders geeignet, in kompakten Rundfunkempfangsgeräten eingesetzt zu werden, insbesondere in für den Einbau in Kraftfahrzeugen vorgesehenen Geräten ("Autoradios")

Aus der Druckschrift US-4,974,454 ist ein Audiosignalprozessor mit mehreren Audiosignal-Eingängen und zwei Audiosignal-Ausgängen sowie einem Steuereingang bekannt, der eine zwischen den Audiosignal-Eingängen und den Audiosignal-Ausgängen geschaltete Audiosignalverarbeitungseinheit aufweist, wobei die Audiosignalverarbeitungseinheit eine integrierte, über den Steuereingang ansteuerbare Hinweistongeneratorschaltung aufweist, deren Hinweistonsignal in Abhängigkeit von dem Zustand des Steuereinganges auf mindestens einen der Audiosignal-Ausgänge geschaltet wird. Das Ausgangssignal eines Oszillators wird durch einen programmierbaren Frequenzteiler in ein niederfrequenteres Hinweistonsignal heruntergeteilt.

Bei Geräten aus dem Bereich der Unterhaltungselektronik im allgemeinen und bei Rundfunkempfangsgeräten im besonderen ist es häufig zweckmäßig oder sogar erforderlich, jeden manuellen Bedienvorgang des Bedieners mit einem kurzen akustischen Hinweiston zu quittieren. Besonders gilt dies für kompakte Rundfunkempfangsgeräte, die zum festen Einbau in Kraftfahrzeuge vorgesehen sind. Bei diesen Geräten ist davon auszugehen, daß sie häufig während der Fahrt durch den Fahrer bedient werden müssen. Während des Bedienvorganges kann der Fahrer nur einen geringen Teil seiner Aufmerksamkeit auf den Bedienvorgang richten. Er muß weiterhin sein Fahrzeug unter Kontrolle halten. So ist es ihm häufig nicht möglich, beispielsweise ein Frequenzanzeige-Display genau dahingehend zu beobachten, ob eine gewünschte Sendereinstellung erfolgreich vorgenommen worden ist. Ist das Rundfunkempfangsgerät mit einer Vorrichtung ausgestattet, die einen Hinweiston erzeugt, sobald ein Bedienvorgang wie beispielsweise das Niederdrücken einer Taste im Bedienfeld vorgenommen worden ist, so ist es nicht mehr unbedingt erforderlich, daß der Fahrer seinen Blick auf die Anzeigevorrichtung des Empfangsgerätes richtet.

Bei kompakten Rundfunkempfangsgeräten, wie sie insbesondere bei der Ausrüstung von Kraftfahrzeugen Verwendung finden, ist seit langem ein Trend zu beobachten, zur Kostensenkung bei der Herstellung die gesamte elektrische Schaltung des Empfängers aus möglichst wenigen hochintegrierten elektronischen Bausteinen zusammenzufügen.

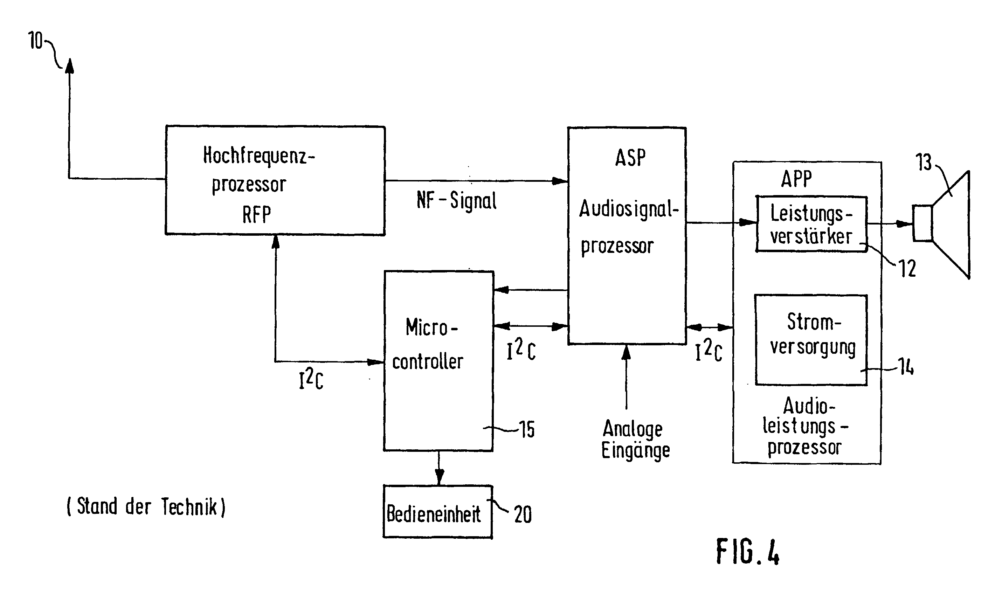

**Fig.4** zeigt ein Blockschaltbild eines Rundfunkempfangsgeräts nach dem Stand der Technik. Die von einer Hochfrequenzantenne 10 gelieferten Hochfrequenzsignale werden einem Hochfrequenzprozessor RFP zugeführt. Der Hochfrequenzprozessor RFP beinhaltet Hochfrequenz-Vorstufen, Tuner, Zwischenfrequenzverstärker und -Filter sowie Demodulatoren. Ein das Nutzsignal des empfangenen Senders darstellendes Niederfrequenzsignal wird einem Audiosignalprozessor ASP zugeführt. Dieses Niederfrequenzsignal umfaßt nicht nur das demodulierte Audiosignal, sondern auch Hilfssignale für Stereo-Empfang, ARI-Kennung, RDS etc. und andere.

Der Audiosignalprozessor ASP setzt insbesondere das vom Hochfrequenzprozessor RFP gelieferte Niederfrequenzsignal in Audiosignale um, die einem Audio-Leistungsprozessor APP zugeführt werden. Der Audio-Leistungsprozessor APP umfaßt insbesondere einen Leistungsverstärker 12, der die vom Audio-Signalprozessor ASP gelieferten Ausgangssignale soweit verstärkt, daß sie durch Lautsprecher 13 wiedergegeben werden können. Ferner umfaßt der Audio-Leistungsprozessor APP ein Spannungsreglermodul 14 zur Stromversorgung.

Dem Audiosignalprozessor ASP können über weitere analoge Eingänge andere Audiosignale, beispielsweise von Kassettenrecordern, CD-Abspielgeräten o. dgl. zugespeist werden.

Das beschriebene Rundfunkempfangsgerät wird als Ganzes durch einen Mikrocontroller 15, der mit einer dem Bediener zugänglichen Bedieneinheit 20 verbunden ist, gesteuert. Der Datenaustausch zwischen dem Mikrocontroller 15 einerseits und dem Hochfrequenzprozessor RFP, dem Audiosignalprozessor ASP und dem Audio-Leistungsprozessor APP andererseits erfolgt durch einen herkömmlichen I²C-Bus.

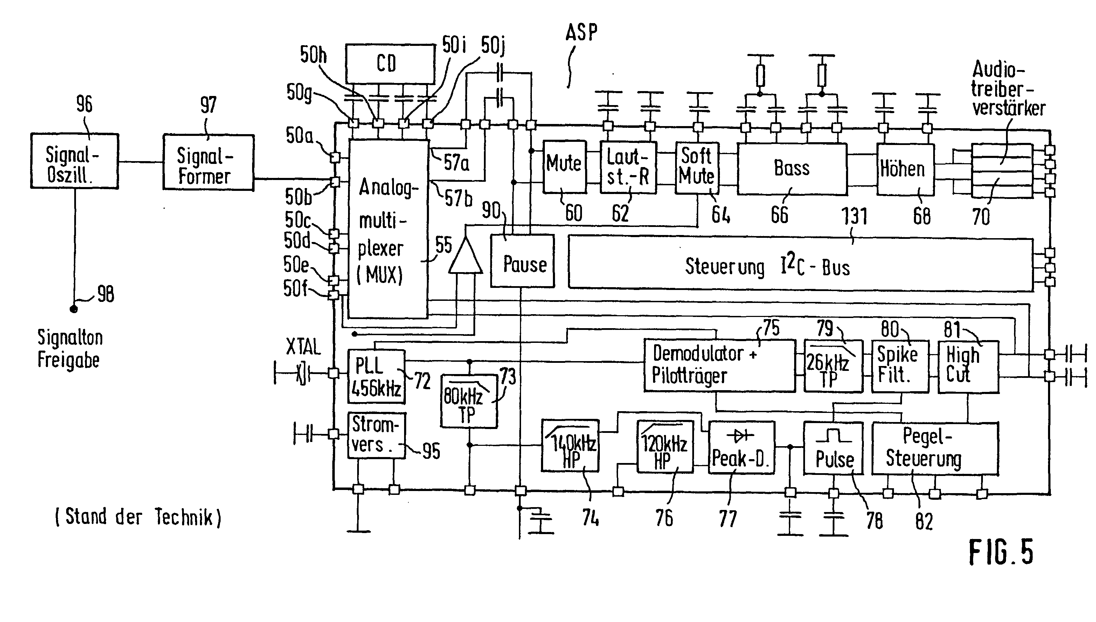

**Fig. 5** zeigt ein schematisches Blockschaltbild des Audiosignalprozessors ASP des in **Fig. 4** dargestellten Rundfunkempfängers. Der Audiosignalprozessor ASP weist eine Anzahl von analogen Audiosignaleingängen 50a bis 50j auf, die mit entsprechenden Eingangsleitungen eines Analog-Multiplexers 55 verbunden sind. Ein Stereo-Ausgangssignal des Analog-Multiplexers 55 wird über Ausgangsleitungen 57a und 57b einer Kette aus hintereinander geschalteten Signalbehandlungsvorrichtungen 60, 62, 64, 66, 68 zugespeist.

Zunächst gelangen die Audiosignale in ein Stummschaltungsfilter ("Mute") 60, danach nacheinander in einen Lautstärkeregler 62, in eine zweite Stummschaltungsanordnung mit weicher Stummschaltungseigenschaft ("Soft Mute") 64, einen Tiefenregler ("Bass") 66 sowie einem Höhenregler 68. Danach werden die Stereo-Audiosignale einer Anzahl von Audiotreiberverstärkern 70 zugespeist, wo sie soweit konditioniert werden, daß sie für die Ansteuerung der Leistungsendstufen im Leistungsverstärker 12 innerhalb des Audio-Leistungsprozessors APP geeignet sind.

Dabei wird jeder Kanal des Stereosignals in einen ersten Unterkanal für einen vorn in der Fahrgastzelle anzubringenden ersten Lautsprecher und einen zweiten Unterkanal für einen hinten im Fahrgastraum anzubringenden zweiten Lautsprecher aufgeteilt.

Ferner weist der Audiosignalprozessor eine Reihe von üblichen Funktionsblöcken 72 bis 82 auf, die zur Verarbeitung des Stereo-Differenzsignals, des ARI-Signals usw. erforderlich sind. Schließlich sind eine Pausenschaltung 90 und eine Stromversorgungseinrichtung 95 vorgesehen.

Um das Erzeugen eines Hinweistones bei der Vornahme eines Bedienvorganges an der Bedieneinheit 20 des Mikrocontrollers 15 zu ermöglichen, ist bei dem aus **Fig. 5** bekannten Rundfunkempfangsgerät an einen Analogsignaleingang 50b des Analogmultiplexers 55 des Audiosignalprozessors ASP über einen Signalformer 97 ein Rechtecksignaloszillator 96 angeschlossen. Der Signaloszillator 96 kann beispielsweise als astabile Kippstufe ausgestaltet sein. Es ist aber auch möglich, ein geeignetes Rechtecksignal direkt durch den Mikrocontroller 15 zu gewinnen, indem eine Programmschleife abgearbeitet wird, die einen mit dem Eingang des Signalformers 97 verbundenen Ausgangsport (nicht dargestellt) des Mikrocontrollers 15 abwechselnd mit einer vorbestimmten zeitlichen Verzögerung von einem niedrigen Pegel auf einen hohen Pegel und umgekehrt schaltet.

Da die Wiedergabe eines reinen Rechtecksignals als Hinweiston in den Lautsprechern zu einem Störgefühle auslösenden und daher unerwünschten Klangeindruck führt, ist es erforderlich, den Obertongehalt des Signals durch den Signalformer 97 zu vermindern. Durch den Signalformer 97 wird das vom Signaloszillator gelieferte Rechtecksignal gefiltert, so daß annähernd ein sinusförmiges Signal entsteht, welches dem Analog-Multiplexer 55 zugespeist wird.

Der Signaloszillator 96 weist einen Freigabe-Eingang 98 auf. Wenn dieser Freigabe-Eingang 98 auf einem ersten elektrischen Pegel gehalten wird, ist der Signaloszillator 96 blockiert. Wird der Freigabe-Eingang 88 auf einen zweiten elektrischen Pegel gelegt, erzeugt der Signaloszillator 96 das Rechtecksignal, und ein Hinweiston wird im Lautsprecher 13 hörbar, sobald der entsprechende Eingang am Analog-Multiplexer MUX aktiviert wird.

Damit der Signalformer 97 die Obertöne des durch den Signaloszillator 96 erzeugten Rechtecksignals mit hinreichender Qualität ohne unmäßige Bedämpfung der Grundfrequenz ausfiltern kann, ist der Signalformer 97 beim Stand der Technik für eine vorbestimmte Grundfrequenz des Signaloszillators 96 dimensioniert.

Dies führt jedoch zu dem Problem, daß bei dem bekannten, in den **Fign. 4** und **5** dargestellten Rundfunkempfangsgerät nur eine einzige vorgewählte Tonhöhe des Hinweistones möglich ist. Demgegenüber wäre es jedoch wünschenswert, in einem verbesserten Empfangsgerät eine Vielzahl von unterschiedlich klingenden Hinweistönen erzeugen zu können, um beispielsweise einen erfolgreichen Bedienvorgang von einem solchen unterscheiden zu können, bei dem das Gerät nicht in der vom Bediener erwarteten Weise reagiert hat (akustische Fehlermeldung).

Dem Fachmann ist deutlich, daß der in den **Fign. 4** und **5** wiedergegebene Audiosignalprozessor ASP nicht die einzig mögliche Ausführungsform eines solchen Prozessors darstellt. Insbesondere kann der Audiosignalprozessor auch ohne die Funktionseinheiten zur Behandlung von FM-Stereosignalen implementiert sein. Auch die Art und Anzahl der NF-Stufen zur Beeinflussung des Audiosignals kann im Einzelfall variieren.

Bereits bei der Verwendung lediglich eines einzigen Hinweistones weist die aus dem Stand der Technik bekannte Schaltungsanordnung nach **Fig. 5** den Nachteil auf, daß sie außerhalb des vorzugsweise als integrierte Schaltung ausgeführten Audiosignalprozessors ASP zusätzliche externe Bauteile erfordert. Wenn der Audiosignalprozessor ASP als integrierte Schaltung ausgeführt ist, ist es darüberhinaus nachteilig, daß ein weiterer Signaleingang und somit ein weiterer Gehäusepin erforderlich ist.

Aufgabe der vorliegenden Erfindung ist es daher, einen Audiosignalprozessor vorzusehen, bei dem das Erzeugen unterschiedlicher Hinweistöne möglich ist und der mit möglichst wenig externer Beschaltung leicht als integrierter Baustein ausgeführt werden kann.

Diese Aufgabe wird erfindungsgemäß gelöst durch einen Audiosignalprozessor mit den Merkmalen des Patentanspruches 1. Bevorzugte Weiterbildungen sind in den Unteransprüchen angegeben.

Im folgenden wird die Erfindung anhand der Zeichnung näher erläutert.
- **Fig. 1**: zeigt ein schematisches Blockschaltbild eines Teiles einer Ausführungsform eines erfindungsgemäßen Audiosignalprozessors zum Erzeugen eines programmierbaren Hinweistones.
- **Fig. 2A**: zeigt ein schematisches Blockschaltbild für einen einstellbaren Signalformer aus dem in **Fig. 1** dargestellten Teils einer Ausführungsform eines erfindungsgemäßen Audiosignalprozessors.
- **Fig. 2B**: zeigt ein schematisches Blockschaltbild für eine andere Ausführung eines einstellbaren Signalformers aus dem in Fig. 1 dargestellten Teil einer Ausführungsform eines erfindungsgemäßen Audiosignalprozessors.
- **Fig. 3**: zeigt ein schematisches Schaltbild einer Ausführungsform des einstellbaren Signalformers des in **Fig. 1** dargestellten Teils einer Ausführungsform eines erfindungsgemäßen Audiosignalprozessors.
- **Fig. 4**: zeigt ein schematisches Blockschaltbild eines Rundfunkempfangsgerätes nach dem Stand der Technik.
- **Fig. 5**: zeigt ein schematisches Blockschaltbild des Audiosignalprozessors des Rundfunkempfangsgerätes aus **Fig. 4** mit einiger peripherer Beschaltung.

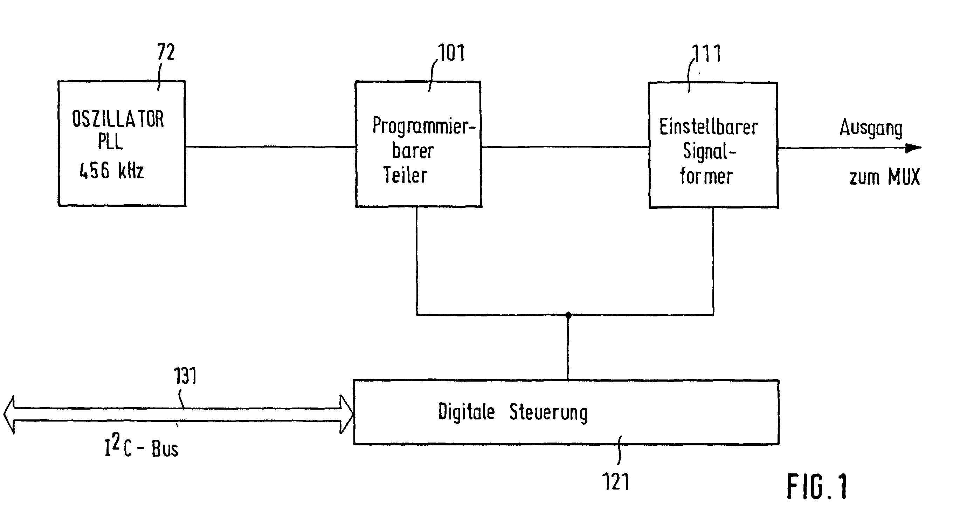

**Fig. 1** zeigt ein schematisches Blockschaltbild eines Teiles einer Ausführungsform eines erfindungsgemäßen Audiosignalprozessors ASP zum Erzeugen eines programmierbaren Hinweistones. Die in **Fig. 1** gezeigte Schaltung eignet sich insbesondere zur Integration mit einem bekannten Audiosignalprozessor ASP, wie er in **Fig. 5** dargestellt ist.

Zur Rückgewinnung des Stereo-Tones bei Stereo-Sendungen in dem in **Fig. 5** gezeigten Audiosignalprozessor ASP ist es erforderlich, einen dem Nutzsignal aufmodulierten 19kHz - Stereo-Pilotton zu erkennen und zur Rekonstruktion eines 38 kHz-Trägers zu nutzen, der zur Gewinnung des Kanaldifferenzsignals benötigt wird. Hierzu ist eine PLL-Schaltung 72 vorgesehen, die exakt mit dem 19 kHz Stereo-Pilotton verriegelt ist. Der dazugehörige spannungsgesteuerte Oszillator (VCO, nicht dargestellt) arbeitet auf einer Frequenz von 456 kHz.

Wenn auch das Grundsignal zur Gewinnung des Hinweistonsignals im Prinzip aus anderen Oszillatoren bezogen werden kann, so ist es vorteilhaft, dafür solche Oszillatoren zu verwenden, die bereits in der Schaltung des Audiosignalprozessors ASP vorhanden sind. Besonders vorteilhaft ist es dabei, auf den Ausgang des PLL-Oszillators 72 zurückzugreifen, da dessen Ausgangsfrequenz von 456 kHz zum einen nicht zu hoch ist, so daß sich der Aufwand für ein Herunterteilen der Frequenz in Grenzen hält, und da diese Frequenz hinreichend stabil ist.

In dem Ausführungsbeispiel wird daher aus der PLL-Oszillatorschaltung 72 ein 456 kHz-Signal abgenommen und einem Eingang eines programmierbaren Teilers 101 eingespeist. Der Ausgang des programmierbaren Teilers 101 ist mit dem Eingang eines einstellbaren Signalformers 111 verbunden. Der Ausgang des einstellbaren Signalformers 111 ist intern mit einem Eingang (nicht dargestellt) des Analogmultiplexers 55 verbunden.

Das Teilungsverhältnis des programmierbaren Teilers 101 sowie die Filtercharakteristik des einstellbaren Signalformers 111 werden von einer digitalen Steuerung 121 gesteuert. Die digitale Steuerung 121 ist über einen I²C-Bus 131 mit dem Mikrocontroller 15 verbunden. Das im Mikrocontroller 15 ablaufende Steuerprogramm bestimmt über den I²C-Bus mittels der digitalen Steuerung 121 das Teilungsverhältnis des programmierbaren Teilers 101 sowie die Filtercharakteristik des einstellbaren Signalformers 111.

Um beispielsweise einen Hinweiston einer Frequenz von 1 kHz zu erzeugen, ist es erforderlich, den programmierbaren Teiler 101 mit einem Teilungsverhältnis von 1:456 zu betreiben. Ferner müssen die Kennwerte des einstellbaren Signalformers 111 derart programmiert sein, daß ein am Eingang des einstellbaren Signalformers 111 anliegendes Rechtecksignal einer Frequenz von 1 kHz in einer zweckmäßigen Art und Weise gefiltert wird, so daß die Obertöne gedämpft werden, ohne daß die Grundfrequenz von 1 kHz zu sehr vermindert wird.

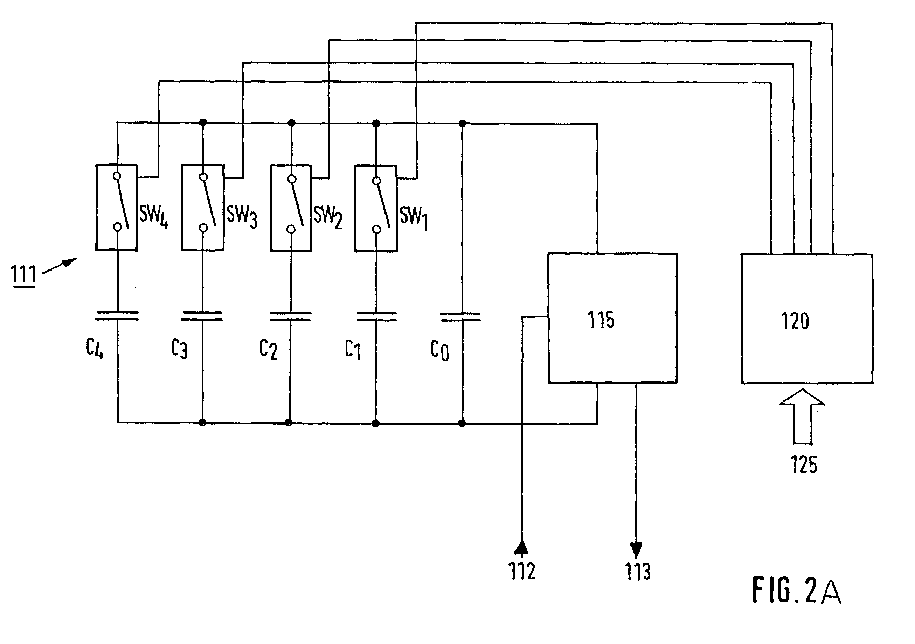

**Fig. 2A** zeigt ein schematisches Blockschaltbild für einen einstellbaren Signalformer 111 aus dem in **Fig. 1** dargestellten Ausschnitt einer Ausführungsform eines erfindungsgemäßen Audiosignalprozessors ASP. Die Schaltung weist insbesondere ein RC-Filter 115 mit einem Eingang 112 und einem Ausgang 113 auf. Das RC-Filter 115 ist bevorzugt als aktives RC-Filter ausgeführt; es sind jedoch auch andere Konstruktionen möglich, insbesondere passive RC- Filter. Auch kann das RC-Filter in SC-Technik ("Switched Capacitor") ausgeführt sein.

Der Eingangsanschluß 112 dient dabei als Eingang des einstellbaren Signalformers 111 und der Ausgangsanschluß 113 als dessen Ausgang. Im vorliegenden Ausführungsbeispiel ist der frequenzgangbestimmende Kondensator des RC-Filters auf Teilkapazitäten C₀, C₁, C₂, C₃ und C₄ aufgeteilt. Die Schaltungsanordnung ist dabei derart gewählt, daß die erste Kapazität C₀ als Grundkapazität ständig wirksam ist, wohingegen die weiteren Teilkapazitäten C₁, C₂, C₃ sowie C₄ über jeweils entsprechend zugeordnete Schalteinrichtungen SW₁, SW₂, SW₃ bzw. SW₄ selektiv aktivierbar bzw. abschaltbar sind.

Die Schalteinrichtungen SW₁, SW₂, SW₃ und SW₄ werden durch eine Filtersteuereinheit 120 angesteuert. Die Filtersteuereinheit 120 weist einen als Datensammelleitung (Bus) 125 ausgeführten Eingang auf, der mit der digitalen Steuerung 121 verbunden ist, sowie für jeden der Schalteinrichtungen SW₁ SW₂, SW₃, SW₄ je einen Ausgangsanschluß. Im beschriebenen Ausführungsbeispiel ist die Filtersteuereinheit 120 als Decoderschaltung ausgeführt, wobei die Schalteinrichtung SW₁ bis SW₄ nach Maßgabe des am Eingang 125 anliegenden Binärsignals ein- bzw. ausgeschaltet werden. Die Filtersteuereinheit kann auch über spezielle Ansteuerleitungen anstelle einer Sammelleitung 125 angesteuert werden.

Wie unmittelbar einsichtig ist, ist die Erfindung nicht auf eine bestimmte Anzahl von Teilkapazitäten beschränkt. Für einfachere Anwendungsfälle genügt es, eine Grundkapazität C₀ sowie eine einzige zuschaltbare Kapazität C₁ vorzusehen, um damit zwei verschiedene Rechtecksignale unterschiedlicher Grundfrequenz filtern zu können.

Ferner kann die Filtersteuereinheit 120 vereinfacht implementiert werden, wenn der Mikrocontroller 15 derart ausgestaltet ist, so daß die korrekte Ansteuerung der Schalteinrichtungen unter der Kontrolle des im Mikrocontroller ablaufenden Programmes über den I²C-Bus und die digitale Steuerung 121 durchgeführt wird.

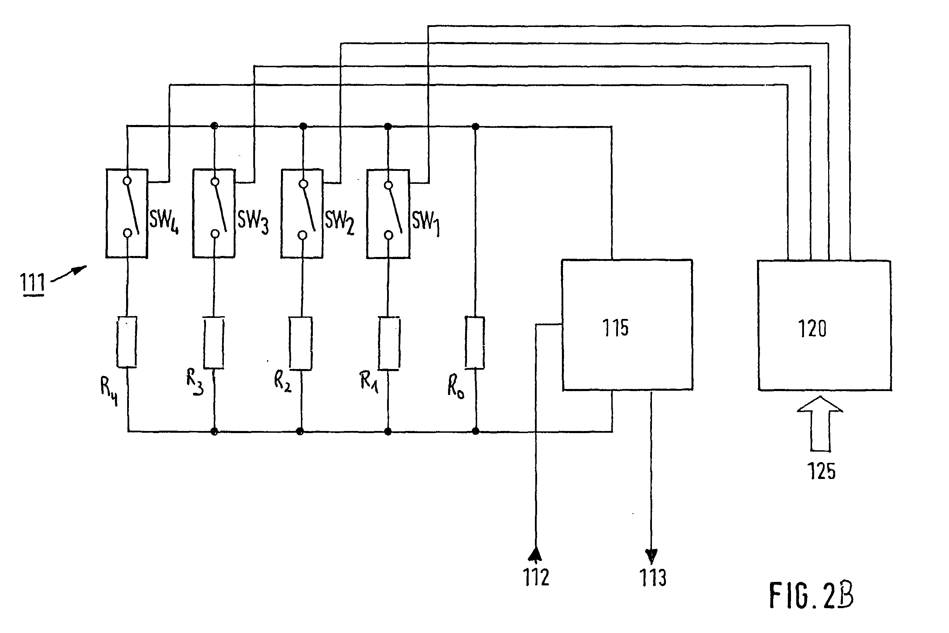

Ferner ist es weiterhin möglich, bei dem RC-Filter 115 nicht oder nicht ausschließlich die Kapazität C in Teilkapazitäten C₀, C₁, C₂, ..., aufzuspalten; ebensogut kann auch der Widerstand R in Teilwiderstände R₀, R₁, R₂, ..., aufgespalten werden. Schließlich ist es möglich, beide Ansätze zu kombinieren (Fig. 2B).

Ferner ist ersichtlich, daß nicht nur eine einstellbare Parallelschaltung von Kondensatoren oder Widerständen, sondern auch deren umschaltbare Reihenschaltung zur Veränderung der Kennwerte des Signalformers herangezogen werden kann (nicht dargestellt).

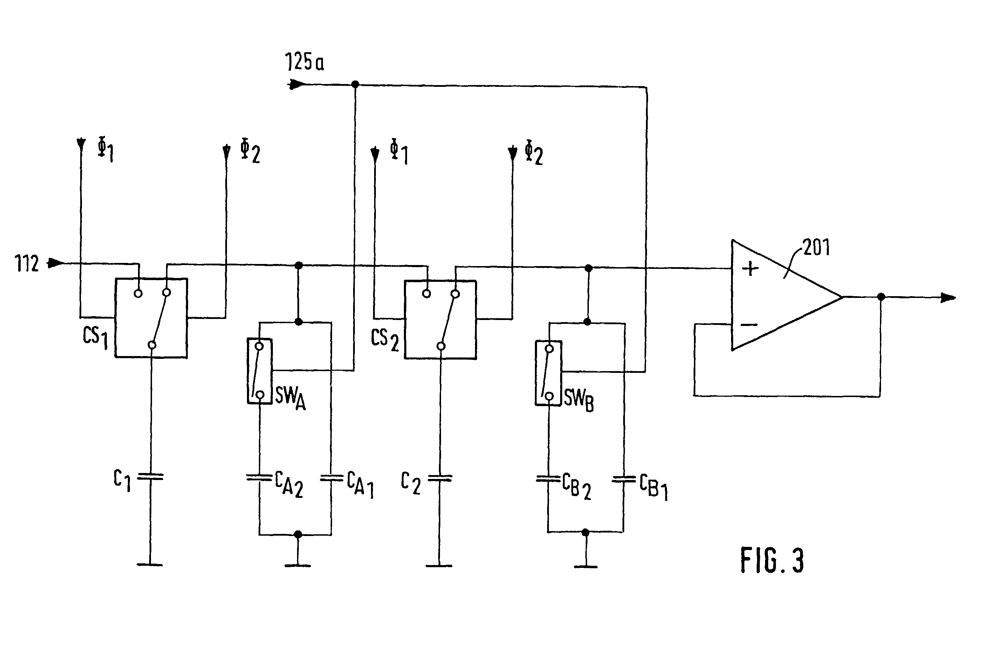

**Fig. 3** zeigt ein schematisches Schaltbild einer Ausführungsform des einstellbaren Signalformers 111 des in **Fig. 1** dargestellten Teiles eines Ausführungsbeispiels eines Audiosignalprozessors ASP.

Dieses Ausführungsbeispiel beschränkt sich exemplarisch auf eine Filterung von zwei unterschiedlichen Hinweistönen. Die Schaltung zeigt im Prinzip ein aktives RC-Filter zweiter Ordnung mit einem Operationsverstärker 201.

Um die Integration der gesamten in **Fig. 3** dargestellten Schaltung in einer integrierten Schaltung zu erleichtern, sind sämtliche RC-Glieder mit als geschaltete Kondensatoren realisieren Widerständen ausgeführt (sog. "switched capacitor"-Technik). Diese sog. "switched capacitor"-Technik als solche ist bekannt und beispielsweise in der Monographie von Gregorian, Roubik und Temes, Gabor C.: "Analog MOS Integrated Circuits for Signal Processing" bekannt.

Der Operationsverstärker 201 ist als Spannungsfolger geschaltet, d. h., der invertierende Eingang des Operationsverstärkers 201 ist fest mit dessen Ausgang verbunden. Der nicht-invertierende Eingang des Operationsverstärkers 201 erhält über einen ersten geschalteten Kondensator CS₁,C₁ und einen zweiten geschalteten Kondensator CS₂,C₂ das an dem Eingangsanschluß 112 anliegende Eingangssignal. Dabei werden der erste geschaltete Kondensator CS₁, C₁ und der zweite geschaltete Kondensator CS₂, C₂ durch ein erstes Taktsignal Φ₁ sowie durch ein zweites Taktsignal Φ₂ geschaltet. Wie in der SC-Technik üblich, sind die beiden Taktphasen Φ₁, Φ₂ derart ausgestaltet, daß sich ihre hochpegeligen (aktiven) Intervalle zu keinem Zeitpunkt überlappen. Der Signalpfad zwischen dem ersten geschalteten Kondensator CS₁, C₁ und dem zweiten geschalteten Kondensator CS₂, C₂ ist über einen ersten frequenzgangbestimmenden Kondensator C_{A1} mit einem Bezugspotential (Masse) verbunden. Der nicht-invertierende Eingang des Operationsverstärkers 201 ist über einen zweiten frequenzgangbestimmenden Kondensator C_{B1} mit dem Bezugspotential (Masse) verbunden.

Über eine erste Schalteinrichtung SW_{A} ist ein Kondensator C_{A2} dem ersten frequenzgangbestimmenden Kondensator C_{A1} parallel zuschaltbar. In gleicher Weise ist über eine zweite Schalteinrichtung SW_{B} ein Kondensator C_{B2} dem zweiten frequenzgangbestimmenden Kondensator C_{B1} parallel zuschaltbar. Die Schalteinrichtungen SW_{A}, SW_{B} sind über einen Steuereingang 125a schaltbar. Wenn an dem Steuereingang 125a ein erstes Potential anliegt, sind beide Schalteinrichtungen SW_{A}, SW_{B} in elektrisch nicht leitendem Zustand, was dazu führt, daß der Frequenzgang ausschließlich durch die Kondensatoren C_{A1}, C_{B1} bestimmt wird. Wird an den Eingang 125a ein zweites elektrisches Potential angelegt, so werden die elektrischen Schalteinrichtungen SW_{A}, SW_{B} elektrisch leitfähig, was dazu führt, daß jeweils die Summe der Kapazitätswerte C_{A1} plus C_{A2} bzw. C_{B1} plus C_{B2} für den Frequenzgang wirksam ist.

Die Schalteinrichtungen SW_{A} und SW_{B} werden im Regelfall auf bekannte Art und Weise durch MOS-Transistoren implementiert, um eine Integration in einem integrierten Schaltkreis zu ermöglichen. Dasselbe gilt für die Schalteinrichtungen CS₁ und CS₂.

Selbstverständlich ist der einstellbare Signalformer 111 nicht auf ein aktives RC-Filter zweiter Ordnung gemäß **Fig. 3** beschränkt.

Eine weitere Verbesserung des Audiosignalprozessors ASP ergibt sich dadurch, daß eine Einrichtung geschaffen wird, mit der ein Überblenden des Hinweistones mit dem Audio-Nutzsignal möglich ist. Dies kann beispielsweise dadurch realisiert werden, indem der Analog-Multiplexer 55 auf herkömmliche Weise mit einem Überblend-Spannungsteiler (nicht dargestellt) versehen wird, so daß der gewünschte Effekt eintritt.

## Patentansprüche

1. Audiosignalprozessor
a) mit mindestens einem Audiosignal-Eingang (50a - 50j) und mindestens einem Audiosignal-Ausgang sowie mindestens einem Steuereingang (131), und
b) mit einer zwischen Audiosignal-Eingang und Audiosignal-Ausgang geschalteten Audiosignalverarbeitungseinheit,
c) wobei die Audiosignalverarbeitungseinheit eine integrierte, über den Steuereingang (131) ansteuerbare programmierbare Hinweistongeneratorschaltung (72, 101, 111) aufweist, deren Hinweistonsignal in Abhängigkeit von dem Zustand des Steuereinganges (131) auf den Audiosignal-Ausgang geschaltet wird,
**dadurch gekennzeichnet, daß**
d) die programmierbare Hinweistongeneratorschaltung (72, 101, 111) einen einstellbaren Signalformer (111) aufweist, der die Signalform des Hinweistonsignals beeinflußt,
e) wobei der einstellbare Signalformer (111) in Abhängigkeit von dem gewählten Hinweistonsignal durch den Zustand des Steuereingangs (131) eingestellt wird,
f) wobei der Hinweistongenerator einen programmierbaren Frequenzteiler (101) aufweist, und
g) wobei das Ausgangssignal eines mit einem Stereo-Pilotton verriegelten PLL-Oszillators (72) an den Eingang des programmierbaren Frequenzteilers (101) gelegt ist.

2. Audiosignalprozessor nach Anspruch 1, wobei die programmierbare Hinweistongeneratorschaltung (72, 101, 111) in Abhängigkeit von dem Zustand des Steuereinganges (131) mindestens zwei verschiedene Hinweistonsignale erzeugt.

3. Audiosignalprozessor nach Anspruch 1 oder 2, wobei der einstellbare Signalformer (111) aufweist:
a) ein RC-Filter (115),
b) eine Filtersteuereinheit (120), und
d) mindestens eine mit einer Zusatzkapazität (C1 - C4) verbundene Schalteinrichtung (SW1 - SW4),
e) wobei die Einstellung des einstellbaren Signalformers (111) dadurch geschieht, daß durch jede der Schalteinrichtungen (SW1 - SW4) jeweils eine oder mehrere der Zusatzkapazitäten (C1 - C4) unter der Kontrolle der Filtersteuereinheit (120) einem frequenzgangbestimmenden Kondensator (C0) des RC-Filters (115) parallel oder in Reihe geschaltet wird.

4. Audiosignalprozessor nach Anspruch 1 oder 2, wobei der einstellbare Signalformer (111) aufweist:
a) ein RC-Filter (115),
b) eine Filtersteuereinheit (120), und
d) mindestens eine mit einem Zusatzwiderstand verbundene Schalteinrichtung (SW1 - SW4),
e) wobei die Einstellung des einstellbaren Signalformers (111) dadurch geschieht, daß durch jede der Schalteinrichtungen (SW1 - SW4) jeweils eine oder mehrere der Zusatzwiderstände unter der Kontrolle der Filtersteuereinheit (120) einem frequenzgangbestimmenden Widerstand des RC-Filters (115) parallel oder in Reihe geschaltet wird.

5. Audiosignalprozessor nach einem der Ansprüche 3 oder 4, wobei mindestens ein frequenzgangbestimmender Widerstand R des RC-Filters (115) in switched capacitor Technik ausgeführt ist.

6. Audiosignalprozessor nach einem der Ansprüche 1 bis 5, wobei das Teilungsverhältnis des programmierbaren Frequenzteilers (101) durch den Zustand des Steuereingangs (131) bestimmt ist.

7. Audiosignalprozessor nach einem der Ansprüche 1 bis 6, **dadurch gekennzeichnet, daß** der Ausgang des programmierbaren Frequenzteilers (101) mit dem Eingang des einstellbaren Signalformers (111) verbunden ist.

## Claims

1. An audio signal processor
a) having at least one audio signal input (50a to 50j) and at least one audio signal output as well as at least one control input (131), and
b) having an audio signal processing unit connected between audio signal input and audio signal output,
c) the audio signal processing unit having an integrated programmable indicator tone generator circuit (72, 101, 111) to be driven via the control input (131) and whose indicator tone signal is switched to the audio signal output in accordance with the state of the control input (131),
**characterized in that**
d) the programmable indicator tone generator circuit (72, 101, 111) has an adjustable signal shaper (111) which influences the signal shape of the indicator tone signal,
e) the adjustable signal shaper (111) being adjusted in accordance with the selected indicator tone signal by the state of the control input (131),
f) the indicator tone generator having a programmable frequency divider (101), and
g) the output signal of a phase-locked oscillator (72) locked with a stereo pilot signal being applied to the input of the programmable frequency divider (101).

2. An audio signal processor according to claim 1, wherein the programmable indicator tone generator circuit (72, 101, 111) produces at least two different indicator tone signals in accordance with the state of the control input (131).

3. An audio signal processor according to claim 1 or 2, wherein the adjustable signal shaper (111) has:
a) an RC filter (115),
b) a filter control unit (120), and
d) at least one switching device (SW₁ to SW₄) connected with an additional capacitance (C₁ to C₄),
e) the adjustable signal shaper (111) being adjusted by each of the switching devices (SW₁ to SW₄) switching one or more of the additional capacitances (C₁ to C₄) in parallel or in series with a frequency response-determining capacitor (C₀) of the RC filter (115) under the control of the filter control unit (120).

4. An audio signal processor according to claim 1 or 2, wherein the adjustable signal shaper (111) has:
a) an RC filter (115),
b) a filter control unit (120), and
d) at least one switching device (SW₁ to SW₄) connected with an additional resistor,
e) the adjustable signal shaper (111) being adjusted by each of the switching devices (SW₁ to SW₄) switching one or more of the additional resistors in parallel or in series with a frequency response-determining resistor of the RC filter (115) under the control of the filter control unit (120).

5. An audio signal processor according to either of claims 3 and 4, wherein at least one frequency response-determining resistor R of the RC filter (115) is executed by the switched capacitor technique.

6. An audio signal processor according to any of claims 1 to 5, wherein the division ratio of the programmable frequency divider (101) is determined by the state of the control input (131).

7. An audio signal processor according to any of claims 1 to 6, **characterized in that** the output of the programmable frequency divider (101) is connected with the input of the adjustable signal shaper (111).

## Revendications

1. Processeur de signal audio comportant
a) au moins une entrée de signal audio (50a-50j) et au moins une sortie de signal audio, ainsi qu'au moins une entrée de commande (131) et
b) une unité de traitement de signal audio placée entre l'entrée de signal audio et la sortie de signal audio,
c) l'unité de traitement de signal audio comportant un circuit générateur de tonalité d'avertissement (72, 101, 111) intégré programmable commandable par l'intermédiaire de l'entrée de commande (131), dont la tonalité d'avertissement est envoyée à la sortie de signal audio en fonction de l'état de l'entrée de commande (131),
**caractérisé par** le fait
d) que le circuit générateur de tonalité d'avertissement (72, 101, 111) programmable comporte un convertisseur de signal (111) réglable, qui agit sur la forme de signal du signal de tonalité d'avertissement,
e) le convertisseur de signal (111) réglable étant réglé par l'état de l'entrée de commande (131) en fonction du signal de tonalité d'avertissement sélectionné,
f) le générateur de tonalité d'avertissement comportant un diviseur de fréquence (101) programmable
g) et le signal de sortie d'un oscillateur PLL (72) verrouillé avec une tonalité pilote stéréo étant appliqué à l'entrée du diviseur de fréquence (101) programmable.

2. Processeur de signal audio selon la revendication 1, le circuit générateur de tonalité d'avertissement (72, 101, 111) programmable générant au moins deux signaux audio d'avertissement différents en fonction de l'état de l'entrée de commande (131).

3. Processeur de signal audio selon la revendication 1 ou 2, le convertisseur de signal (111) réglable comportant :
a) un filtre RC (115)
b) une unité de commande de filtre (120) et
c) au moins un dispositif de commutation (SW1-SW4) relié à une capacité additionnelle (C1-C4),
d) le réglage du convertisseur de signal (111) réglable étant obtenu par le fait que chacun des dispositifs de commutation (SW1-SW4), sous le contrôle de l'unité de commande de filtre (120), connecte chaque fois une ou plusieurs des capacités additionnelles (C1-C4) en parallèle ou en série avec un condensateur (C0) déterminant la réponse en fréquence du filtre RC (115).

4. Processeur de signal audio selon la revendication 1 ou 2, le convertisseur de signal (111) réglable comportant :
a) un filtre RC (115)
b) une unité de commande de filtre (120) et
c) au moins un dispositif de commutation (SW1-SW4) connecté à une résistance additionnelle,
d) le réglage du convertisseur de signal (111) réglable étant obtenu par le fait que chacun des dispositifs de commutation (SW1-SW4), sous le contrôle de l'unité de commande de filtre (120), connecte chaque fois une ou plusieurs des résistances additionnelles en parallèle ou en série avec une résistance déterminant la réponse en fréquence du filtre RC (115).

5. Processeur de signal audio selon une des revendications 3 ou 4, au moins une résistance R déterminant la réponse en fréquence du filtre RC (115) étant agencée selon la technique dite à condensateur commuté (switched capacitor).

6. Processeur de signal audio selon une des revendications 1 à 5, le rapport de division du diviseur de fréquence (101) programmable étant déterminé par l'état de l'entrée de commande (131).

7. Processeur de signal audio selon une des revendications 1 à 6, **caractérisé par le fait que** la sortie du diviseur de fréquence (101) programmable est reliée à l'entrée du convertisseur de signal (111) réglable.
